# EUROPÄISCHE PATENTANMELDUNG

(11) **EP 3 514 126 A1**
(43) Veröffentlichungstag der Anmeldung: **24.07.2019**
(21) Anmeldenummer: 18152107.1
(22) Anmeldetag: 17.01.2018
(51) Int. Cl.: C04B 37/00, C04B 35/80, F01D 5/28

(54) **KERAMISCHER WERKSTOFFVERBUND MIT EINER VERBINDUNGSSCHICHT AUS EINEM MOLYBDÄN-TITANCARBID-KOMPOSITWERKSTOFF, BAUTEIL, GASTURBINE, SOWIE VERFAHREN**

(71) Anmelder: Siemens Aktiengesellschaft, 80333 München (DE)
(72) Erfinder: Jensen, Jens Dahl, 14050 Berlin (DE); Stier, Oliver, 12163 Berlin (DE); Winkler, Gabriele, 13587 Berlin (DE)

(57) **Zusammenfassung**

Die Erfindung betrifft einen Werkstoffverbund (1) mit einer ersten Schicht (2), welche zumindest aus einem keramischen ersten Werkstoff gebildet ist; und einer auf der ersten Schicht (2) angeordneten zweiten Schicht (3), welche zumindest aus einem von dem ersten Werkstoff verschiedenen keramischen zweiten Werkstoff gebildet ist.

Um eine höhere thermische und/oder mechanische Belastbarkeit zu erzielen, ist vorgesehen, dass eine zwischen der ersten Schicht (2) und der zweiten Schicht (3) angeordnete und zumindest teilweise aus einem Molybdän- Titancarbid-Kompositwerkstoff gebildete Verbindungsschicht (4), über welche die erste Schicht (2) mit der zweiten Schicht (3) verbunden ist.

## Beschreibung

Ein erster Aspekt betrifft einen Werkstoffverbund mit einer ersten Schicht aus einem ersten keramischen Werkstoff und einer zweiten Schicht aus einem zweiten keramischen Werkstoff. Ein zweiter Aspekt der Erfindung betrifft ein Bauteil mit einem solchen Werkstoffverbund. Ein dritter Aspekt der Erfindung betrifft eine Gasturbine mit einem solchen Bauteil. Ein vierter Aspekt der Erfindung betrifft schließlich ein Verfahren zum Herstellen eines solchen Werkstoffverbunds.

In Hochtemperaturanwendungen, beispielsweise in einer Gasturbine, werden häufig Bauteile bestehend aus einer Metalllegierung eingesetzt, welche durch einen keramischen Werkstoff vor einer thermischen Überlastung geschützt werden. Beispielsweise kann ein Bauteil für eine Hochtemperaturanwendung einen metallischen Trägerkörper aufweisen, der mit einem keramischen Werkstoff überzogen ist. Durch eine solche Wärmedämmschicht, welche durch den keramischen Werkstoff gebildet ist, kann eine thermische Belastbarkeit des Bauteils gesteigert werden. Dies ist beispielsweise vorteilhaft in Gasturbinen, wo durch ein Erhöhen der thermischen Belastbarkeit von Bauteilen eine höhere Verbrennungstemperatur ermöglicht wird. Durch Erhöhen der Verbrennungstemperatur erhöht sich der thermodynamische Wirkungsgrad der Gasturbine, was in einem verringerten Brennstoffverbrauch und Schadstoffausstoß resultieren kann.

Im besonderen Maße kann die thermische Belastbarkeit erhöht werden, wenn die Wärmedämmschicht aus einem Werkstoffverbund zweier unterschiedlicher keramischen Werkstoffe gebildet ist. Dieser Werkstoffverbund kann eine erste Schicht aus einem keramischen ersten Werkstoff und eine zweite Schicht aus einem keramischen zweiten Werkstoff aufweisen. Problematisch ist, dass der erste Werkstoff und der zweite Werkstoff unterschiedliche thermische Ausdehnungskoeffizienten oder andere abweichende mechanische Eigenschaften haben können. Daraus können bei mechanischer oder thermischer Belastung Sprühbrüche des Werkstoffverbunds resultieren. Dies gilt insbesondere daher, da keramische Werkstoffe üblicherweise äußerst spröde sind.

Es ist Aufgabe der vorliegenden Erfindung, eine mechanische und/oder thermische Belastbarkeit eines eingangs genannten Werkstoffverbunds zu erhöhen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht aus von einem Werkstoffverbund mit einer ersten Schicht, welche zumindest aus einem keramischen ersten Werkstoff gebildet ist und einer auf der ersten Schicht angeordneten zweiten Schicht, welche zumindest aus einem von dem ersten Werkstoff verschiedenen zweiten keramischen Werkstoff gebildet ist. Die erste Schicht und die zweite Schicht können jeweils flächig ausgedehnt sein. Das bedeutet, dass die Dicke der ersten Schicht und/oder der zweiten Schicht verglichen mit der Ausdehnung entlang zweier Raumrichtungen senkrecht zur Dicke gering ist. Gering bedeutet in diesem Kontext insbesondere, dass ein Faktor von mindestens 10, mindestens 100 oder mindestens 1000 zwischen der Dicke der ersten Schicht beziehungsweise der zweiten Schicht und jeder der Raumrichtungen senkrecht zur Dicke liegt.

Um nun eine höhere thermische und/oder mechanische Belastbarkeit zu erzielen, ist erfindungsgemäß vorgesehen, dass eine zwischen der ersten Schicht und der zweiten Schicht angeordnete und zumindest teilweise aus einem Molybdän-Titancarbid-Kompositwerkstoff gebildete Verbindungsschicht, über welche die erste Schicht mit der zweiten Schicht verbunden ist, vorgesehen ist. Mit anderen Worten ist die erste Schicht über eine Verbindungsschicht mit der zweiten Schicht verbunden, wobei die Verbindungsschicht zumindest teilweise aus einem Molybdän-Titancarbid-Kompositwerkstoff gebildet ist. In manchen Ausführungsformen ist die Verbindungsschicht ausschließlich aus dem Molybdän-Titancarbid-Kompositwerkstoff gebildet. In anderen Ausführungsformen ist die Verbindungsschicht aus einem Werkstoffgemisch gebildet, welches den Molybdän-Titancarbid-Kompositwerkstoff und zumindest einen weiteren Werkstoff umfasst. Der Molybdän-Titancarbid-Kompositwerkstoff zeichnet sich durch eine plastische Dehnbarkeit von bis zu 10 Prozent bei Raumtemperatur, eine unbegrenzte kompressive Duktilität bis über 1200 Grad Celsius sowie eine hohe thermische Belastbarkeit aus. Somit handelt es sich bei dem Molybdän-Titancarbid-Kompositwerkstoff gewissermaßen um eine "elastische Keramik". Somit ist erfindungsgemäß zwischen der ersten Schicht und der zweiten Schicht eine elastische und dennoch thermisch belastbare Verbindungsschicht angeordnet. Durch ihre Elastizität beziehungsweise Duktilität ermöglicht die Verbindungsschicht die Aufnahme von Spannungen zwischen der ersten Schicht und der zweiten Schicht, welche beispielsweise aus dem unterschiedlichen thermischen Ausdehnungskoeffizienten resultieren können. Auf diese Weise kann durch die erfindungsgemäße Verbindungsschicht die thermische und/oder mechanische Belastbarkeit des Werkstoffverbunds gegenüber dem Stand der Technik verbessert werden.

Insbesondere ist vorgesehen, dass die Verbindungsschicht sowohl die erste Schicht als auch die zweite Schicht direkt berührt. Mit anderen Worten ist die Verbindungsschicht zwischen der ersten Schicht und der zweiten Schicht angeordnet und in direktem mechanischen Kontakt sowohl mit der ersten Schicht als auch mit der zweiten Schicht. Insbesondere sind zwischen der ersten Schicht und der Verbindungsschicht und/oder zwischen der Verbindungsschicht und der zweiten Schicht jeweils kleine Lufteinschlüsse. Aus diesem Aufbau resultiert eine besondere Kompaktheit des Werkstoffverbunds.

Gemäß einer Weiterbildung ist vorgesehen, dass die Verbindungsschicht sowohl mit der ersten Schicht als auch mit der zweiten Schicht über wenigstens eine jeweilige stoffschlüssige Verbindung verbunden ist. Mit anderen Worten ist die erste Schicht durch atomare oder molekulare Kräfte mit der Verbindungsschicht fest verbunden. Außerdem ist die Verbindungsschicht mit der zweiten Schicht über atomare oder molekulare Kräfte fest verbunden. Die jeweilige stoffschlüssige Verbindung ist dabei nicht notwendigerweise direkt. Das bedeutet, die Verbindungsschicht kann über eine Zwischenschicht hinweg mittels zweier stoffschlüssiger Verbindungen mit der ersten Schicht und/oder der zweiten Schicht verbunden sein. Folglich sind auch die erste Schicht und die zweite Schicht indirekt, nämlich zumindest über Verbindungschicht, stoffschlüssig miteinander verbunden. Daraus ergibt sich ein besonders stabiler Aufbau für den Werkstoffverbund. Außerdem kann hierdurch mechanische Belastbarkeit weiter erhöht sein.

Gemäß einiger Ausführungsformen ist die Verbindungsschicht mit der ersten Schicht und/oder mit der zweiten Schicht direkt stoffschlüssig verbunden. Mit anderen Worten ist die Verbindungsschicht mit der ersten Schicht und/oder der zweiten Schicht in direktem mechanischem Kontakt, wobei an einer jeweiligen Kontaktfläche ein Stoffschluss ausgebildet ist. Mit nochmals anderen Worten berührt die Verbindungsschicht die erste Schicht und/oder die zweite Schicht direkt, wobei an einer jeweiligen Berührfläche ein Stoffschluss ausgebildet ist. Hierdurch kann die mechanische Belastbarkeit weiter erhöht werden.

Gemäß einer Weiterbildung ist zwischen der ersten Schicht und der Verbindungsschicht eine erste Diffusionssperre und/oder zwischen der zweiten Schicht und der Verbindungsschicht eine zweite Diffusionssperre angeordnet. Mit anderen Worten kann der Werkstoffverbund zwischen der ersten Schicht und der Verbindungsschicht die erste Diffusionssperre aufweisen. Alternativ oder zusätzlich kann der Werkstoffverbund zwischen der zweiten Schicht und der Verbindungsschicht die zweite Diffusionssperre aufweisen. Die jeweilige Diffusionssperre kann eine der oben genannten Zwischenschichten ausbilden. Mit anderen Worten kann die erste Schicht über die erste Diffusionssperre mittels zweier Stoffschlüsse indirekt stoffschlüssig verbunden sein. Alternativ oder zusätzlich kann die zweite Schicht über die zweite Diffusionssperre über zwei Stoffschlüsse indirekt mit der Verbindungsschicht stoffschlüssig verbunden sein. Durch die erste Diffusionssperre und/oder die zweite Diffusionssperre kann die Verbindungsschicht vor chemischen Reaktionen, insbesondere Oxidation, geschützt sein. Mit anderen Worten kann die erste Diffusionssperre und/oder die zweite Diffusionssperre zu diesem Zweck dazu ausgebildet sein, das Einbringen von Reagenzien, insbesondere Sauerstoff, in die Verbindungsschicht zu unterbinden.

Hierzu kann die erste Diffusionssperre und/oder die zweite Diffusionssperre zumindest aus Aluminiumoxid gebildet sein. Mit anderen Worten kann die erste Diffusionssperre und/oder die zweite Diffusionssperre aus einem Materialmix für die Diffusionssperre gebildet sein, welcher Aluminiumoxid und einen weiteren Werkstoff umfasst. Alternativ kann die erste Diffusionssperre und/oder die zweite Diffusionssperre ausschließlich aus Aluminiumoxid gebildet sein. Durch eine Diffusionssperre aus Aluminiumoxid ist ein besonders kostengünstiger und effektiver Oxidationsschutz bereitgestellt.

Gemäß einer Weiterbildung ist vorgesehen, dass die erste Diffusionssperre mittels Atomlagenabscheidung auf die erste Schicht aufgebracht ist und/oder die zweite Diffusionssperre mittels Atomlagenabscheidung auf die Verbindungsschicht aufgebracht ist. Mit anderen Worten kann die erste Schicht mittels Atomlagenscheidung mit der ersten Diffusionssperre beschichtet sein. Alternativ oder zusätzlich kann die Verbindungsschicht mittels Atomlagenabscheidung mit der zweiten Diffusionssperre beschichtet sein. Durch das Prinzip der Atomlagenabscheidung kann die jeweilige Diffusionssperre eine besonders homogene und verunreinigungsfreie Struktur haben, eine besonders definierte Dicke aufweisen, besonders dünn sein und/oder eine besonders defektfreie Kristallstruktur aufweisen. Hierdurch können mechanische oder chemische Eigenschaften der jeweiligen Diffusionssperre verbessert werden und/oder die Diffusion der Reagenzien, insbesondere von Sauerstoff, besonders gut unterbunden werden.

Gemäß einer Weiterbildung ist vorgesehen, dass der erste Werkstoff ein keramischer Faserverbundwerkstoff ist, der insbesondere zumindest aus keramischen Fasern einer keramischen Matrix gebildet ist, in welche die Fasern eingebettet sind. Der erste Werkstoff kann somit ein keramischer Faserverbundwerkstoff sein, der auch mit dem englischen Fachbegriff "Ceramic Matrix Composite", kurz "CMC", bezeichnet wird. Beispielsweise weist der Faserverbundwerkstoff einen inneren Aufbau, der aus den keramischen Fasern und der keramischen Matrix besteht, auf. Dabei können die Fasern in die Matrix eingebettet sein. Mit anderen Worten können die Fasern mit der Matrix umgeben sein. Bei den Fasern kann es sich beispielsweise um Mullit-Fasern handeln. Mullit ist ein Gemisch aus Aluminiumoxid und Siliziumoxid. Die Matrix kann zumindest aus Aluminiumoxid, Siliziumoxid oder einer Mischung aus Aluminiumoxid und Siliziumoxid gebildet sein. Derartige Faserverbundwerkstoffe zeichnen sich durch eine hohe mechanische und thermische Belastbarkeit aus.

Eine Weiterbildung sieht vor, dass der zweite Werkstoff eine höhere Hitzebeständigkeit und/oder Korrosionsbeständigkeit als der erste Werkstoff aufweist. Demnach kann die zweite Schicht eine höhere Hitzebeständigkeit und/oder Korrosionsbeständigkeit als die erste Schicht aufweisen. Somit kann die zweite Schicht als Hitzeschild oder Korrosionsschutz für die erste Schicht ausgebildet sein. Dadurch, dass die zweite Schicht beziehungsweise der zweite Werkstoff die höhere Hitzebeständigkeit und/oder Korrosionsbeständigkeit aufweist, kann eine Widerstandsfähigkeit des Werkstoffverbunds gegen thermische Belastungen und/oder gegen Korrosion insgesamt weiter verbessert werden.

Gemäß einer Weiterbildung ist der zweite Werkstoff durch yttriumstabilisiertes Zirkonoxid gebildet. Yttriumstabilisiertes Zirkonoxid weist eine besonders hohe thermische Belastbarkeit auf. Dadurch, dass die zweite Schicht zumindest aus yttriumstabilisiertem Zirkonoxid gebildet ist, kann einer zusätzlich erhöhten thermischen Belastbarkeit des Werkstoffverbunds resultieren.

Ein zweiter Aspekt der Erfindung betrifft ein Bauteil, welches zumindest aus dem zuvor und nachfolgend beschriebenen Werkstoffverbund gebildet ist. Mit anderen Worten ist das Bauteil zumindest teilweise aus dem genannten Werkstoffverbund gefertigt. Auf diese Weise kann ein Bauteil für Hochtemperaturanwendungen bereitgestellt werden, welches eine verbesserte thermische und/oder mechanische Belastbarkeit aufweist.

Gemäß einer Weiterbildung weist das Bauteil wenigstens einen Trägerkörper auf, welcher zumindest teilweise mit dem Werkstoffverbund als Hitzeschild versehen ist. Mit anderen Worten kann der Trägerkörper ein Grundgerüst des Bauteils bilden. Dieses Grundgerüst beziehungsweise der Trägerkörper kann zumindest teilweise mit dem Werkstoffverbund als Hitzeschild versehen beziehungsweise überzogen sein. Der Werkstoffverbund beziehungsweise das Hitzeschild ist dazu ausgebildet, den Trägerkörper vor thermischer Belastung zu schützen. Hierzu kann der Werkstoffverbund beziehungsweise das Hitzeschild als thermischer Isolator an dem Trägerkörper angeordnet sein. Durch Kombination des wenigstens einen Trägerkörpers mit dem Werkstoffverbund als Hitzeschild kann das Bauteil einerseits besonders leicht und/oder stabil und andererseits thermisch besonders belastbar ausgebildet sein.

Eine Weiterbildung sieht vor, dass der Trägerkörper aus einem von dem ersten und dem zweiten Werkstoff unterschiedlichen dritten Werkstoff, insbesondere aus einem metallischen Werkstoff, gebildet ist. Vorzugsweise handelt es sich bei dem metallischen Werkstoff um eine metallische Legierung, nochmals bevorzugt um eine sogenannte Superlegierung. Metallische Werkstoffe, insbesondere metallische Legierungen, zeichnen sich durch hohe Stabilität bei geringem Gewicht aus. Durch Kombination des metallischen Trägerkörpers mit dem Werkstoffverbund kann ein noch leichteres und/oder stabileres und dennoch besonders thermisch belastbares Bauteil geschaffen werden. Das dritte Material kann insbesondere eine Nickel- oder Kobalt-Superlegierung sein.

Ein solches Bauteil eignet sich insbesondere zur Anwendung einer Gasturbine. Ein dritter Aspekt betrifft daher eine Gasturbine mit einem im vorherigen und im Folgenden beschriebenen Bauteil. Insbesondere ist das Bauteil ein thermisch besonders belastetes Bauteil der Gasturbine. Durch die hohe thermische Belastbarkeit kann eine Verbrennungstemperatur der erfindungsgemäßen Gasturbine gegenüber dem Stand der Technik erhöht werden. Diese erhöhte Verbrennungstemperatur resultiert in einem erhöhten thermodynamischen Wirkungsgrad. Aus dem erhöhten Wirkungsgrad kann ein geringerer Brennstoffverbrauch und somit ein geringerer Schadstoffausstoß resultieren.

Ein weiterer Aspekt der Erfindung betrifft ein Verfahren zum Herstellen eines Werkstoffverbunds, bei welchem eine erste Schicht zumindest aus einem keramischen ersten Werkstoff und eine zweite Schicht auf der ersten Schicht angeordnet und zumindest aus einem von dem ersten Werkstoff verschiedenen keramischen zweiten Werkstoff gefertigt wird. Bei dem Verfahren wird die zweite Schicht somit auf der ersten Schicht angeordnet.

Erfindungsgemäß ist vorgesehen, dass zwischen der ersten Schicht und der zweiten Schicht eine zumindest teilweise aus einem Molybdän-Titancarbid-Kompositwerkstoff gebildete Verbindungsschicht angeordnet wird, über welche die erste Schicht mit der zweiten Schicht verbunden wird. Mit anderen Worten werden die erste Schicht und die zweite Schicht über die Verbindungsschicht miteinander verbunden.

In weiterer Ausgestaltung kann die Verbindungsschicht gebildet werden, indem der Molybdän-Titancarbid-Kompositwerkstoff auf die erste Schicht aufgetragen beziehungsweise aufgebracht wird. Die erste Schicht kann mit der Verbindungsschicht beschichtet werden. Vorzugsweise wird der Molybdän-Titancarbid-Kompositwerkstoff mittels Kaltgasspritzen auf die erste Schicht aufgebracht beziehungsweise aufgetragen. Bei diesem Prinzip erfährt der Molybdän-Titancarbid-Kompositwerkstoff keine Phasenumwandlung und keine Oxidation. Die Prozesstemperatur von etwa 1100 Grad Celsius liegt weit unterhalb der Schmelztemperatur des Molybdän-Titancarbid-Kompositwerkstoffs von über 2600 Grad Celsius. Beim Kaltgasspritzen treffen die Partikel in einem Inertgasstrom auf das jeweilige Substrat, vorliegend die erste Schicht. Somit bleibt die Reinheit des Molybdän-Titancarbid-Kompositwerkstoffs erhalten. Vorteilhafterweise wird der Molybdän-Titancarbid-Kompositwerkstoff in Form poröser Pulverteilchen auf das Substrat, vorliegend die erste Schicht, aufgebracht beziehungsweise aufgetragen. Die porösen Pulverteilchen können aus Molybdän-Mikropartikeln und Titancarbid-Mikropartikeln vorgeformt werden, welche eine Größe von wenigen Mikrometern oder weniger als einem Mikrometer aufweisen. Durch die Porosität der Pulverteilchen kollabieren diese beim Aufprall auf das Substrat, vorliegend die erste Schicht, wodurch das Substrat nicht beschädigt wird.

Beispielsweise ist vorgesehen, dass die Mikropartikel des Molybdän-Titancarbid-Kompositwerkstoffs eine Porosität von zumindest 5 Prozent, zumindest 10 Prozent, zumindest 20 Prozent, zumindest 40 Prozent oder zumindest 60 Prozent nach Volumen aufweisen.

Gemäß einer Weiterbildung ist vorgesehen, dass zwischen der ersten Schicht und der Verbindungsschicht eine erste Diffusionssperre und/oder zwischen der zweiten Schicht und der Verbindungsschicht eine zweite Diffusionssperre angeordnet wird. Beispielsweise wird die erste Diffusionssperre auf die erste Schicht aufgetragen beziehungsweise aufgebracht. Mit anderen Worten kann die erste Schicht mit der ersten Diffusionssperre beschichtet werden. In diesem Fall wird die Verbindungsschicht nicht auf die erste Schicht aufgetragen beziehungsweise aufgebracht, sondern auf die Diffusionssperre. Das Substrat für das Kaltgasspritzen der Verbindungsschicht ist in diesem Fall somit die erste Diffusionssperre und nicht die erste Schicht.

Optionalerweise kann an der Verbindungsschicht die zweite Diffusionssperre angeordnet werden. Insbesondere wird die Verbindungsschicht mit der zweiten Diffusionssperre beschichtet. Die zweite Diffusionssperre kann auf die Verbindungsschicht aufgebracht beziehungsweise aufgetragen werden.

Gemäß einer Weiterbildung ist vorgesehen, dass die erste Diffusionssperre mittels Atomlagenabscheidung auf die erste Schicht aufgebracht wird und/oder die zweite Diffusionssperre mittels Atomlagenabscheidung auf die Verbindungsschicht aufgebracht wird. Mit anderen Worten erfolgt das Beschichten der ersten Schicht mit der ersten Diffusionssperre mittels Atomlagenabscheidung und/oder das Beschichten der Verbindungsschicht mit der zweiten Diffusionssperre mittels Atomlagenabscheidung. Durch das Prinzip der Atomlagenabscheidung können für die jeweilige Diffusionssperre eine besonders homogene und verunreinigungsfreie Struktur, eine besonders definierte Schichtdicke, eine besonders geringe beziehungsweise dünne Schichtdicke und/oder eine besonders defektfreie Kristallstruktur erzielt werden. Hierdurch können mechanische oder chemische Eigenschaften der jeweiligen Diffusionssperre verbessert werden und/oder die Diffusion der Reagenzien, insbesondere von Sauerstoff, besonders gut unterbunden werden.

Es zeigen:
- FIG 1: ausschnittsweise einen schematischen Querschnitt durch einen Werkstoffverbund; und
- FIG 2: äußerst schematisch eine Gasturbine.

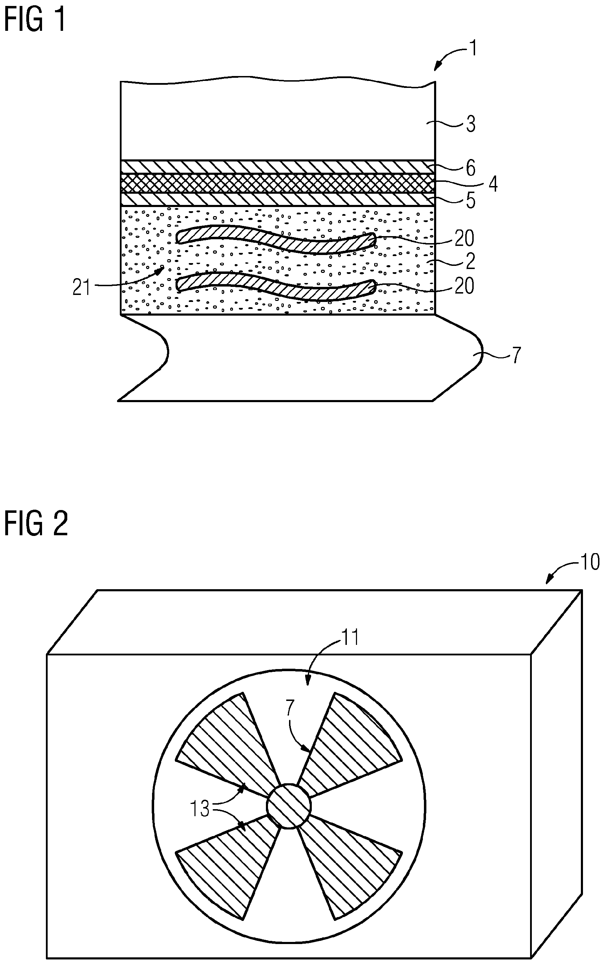

Die FIG 1 zeigt einen Werkstoffverbund 1 in einer äußerst schematischen Schnittansicht. Der Werkstoffverbund 1 ist vorliegend an einem Trägerkörper 7 angeordnet. Der Werkstoffverbund 1 weist eine erste Schicht 2 und eine zweite Schicht 3 auf, wobei die zweite Schicht 3 über der ersten Schicht 2 angeordnet ist. Die erste Schicht 2 ist zumindest aus einem keramischen ersten Werkstoff gebildet. Vorliegend ist die erste Schicht ausschließlich aus dem keramischen ersten Werkstoff gebildet. Die zweite Schicht 3 ist zumindest aus einem von dem ersten Werkstoff verschiedenen keramischen zweiten Werkstoff gebildet. Mit anderen Worten ist der zweite Werkstoff ein keramischer Werkstoff, der von dem ersten Werkstoff verschieden ist. Bei dem ersten Werkstoff und dem zweiten Werkstoff handelt es sich somit um unterschiedliche Keramiken. Vorliegend ist die zweite Schicht 3 ausschließlich aus dem zweiten Werkstoff gebildet.

Vorliegend ist der erste Werkstoff ein keramischer Faserverbundwerkstoff. Der keramische Faserverbundwerkstoff umfasst keramische Fasern 20 und eine keramische Matrix 21, in welche die Fasern 20 eingebettet sind. Mit anderen Worten umfasst der Faserverbundwerkstoff die Matrix 21 und die Fasern 20, wobei die Fasern 20 durch die Matrix 21 umhüllt sind. Vorzugsweise handelt es sich bei den Fasern 20 um Mullit-Fasern. Bei den Mullit-Fasern kann es sich um gesponnene Fasern handeln, welche aus Aluminiumoxid (AL₂O₃) und Siliziumoxid (SiO₂) bestehen. Die Matrix 21 kann aus Aluminiumoxid und/oder Siliziumoxid gebildet sein. Vorliegend ist die Matrix 21 aus Aluminiumoxid gebildet, da diese Ausführung günstiger in der Herstellung ist.

Bei dem zweiten Werkstoff handelt es sich vorliegend um yttriumstabilisiertes Zirkonoxid. Mit anderen Worten ist die zweite Schicht 3 zumindest aus dem yttriumstabilisierten Zirkonoxid gebildet. Vorliegend ist die zweite Schicht 3 ausschließlich aus dem yttriumstabilisierten Zirkonoxid gebildet. Im Allgemeinen ist es vorteilhaft, wenn der zweite Werkstoff eine höhere Hitzebeständigkeit und/oder Korrosionsbeständigkeit als der erste Werkstoff aufweist. Dies trifft auf yttriumstabilisiertes Zirkonoxid im besonderen Maße zu. Somit kann durch Anordnen der zweiten Schicht 3 über der ersten Schicht 2 die thermische Belastbarkeit des Werkstoffverbunds 1, insbesondere gegenüber einer alleinigen Anwendung der ersten Schicht 2, gesteigert werden.

Sowohl die erste Schicht 2 als auch die zweite Schicht 3 sind vorliegend spröde, das heißt sie weisen eine geringe Duktilität beziehungsweise Elastizität auf. Im Falle mechanischer oder thermischer Belastung kann dies zu Spannungen zwischen der ersten Schicht 2 und der zweiten Schicht 3 führen, wenn diese direkt aufeinander angeordnet sind, sich also berühren. Spannungen aufgrund thermischer Belastung können insbesondere dann auftreten, wenn die erste Schicht 2 und die zweite Schicht 3 einen unterschiedlichen thermischen Ausdehnungskoeffizienten aufweisen. Aus diesem Grund ist vorliegend zwischen der ersten Schicht 2 und der zweiten Schicht 3 eine Verbindungsschicht 4 angeordnet. Die Verbindungsschicht 4 weist dabei vorteilhafterweise elastische Eigenschaften auf. Auf diese Weise können Spannungen zwischen der ersten Schicht 2 und der zweiten Schicht 3 durch elastische oder duktile Verformung der Verbindungsschicht 4 aufgefangen werden. Daraus kann eine verbesserte thermische und/oder mechanische Belastbarkeit für den Werkstoffverbund folgen. Benötigt hierfür ist jedoch, dass die Verbindungsschicht 4 eine für diesen Zweck ausreichende thermische Belastbarkeit aufweist und insbesondere ihre Elastizität beziehungsweise Duktilität auch unter hoher thermischer Belastung beibehält. Für Hochtemperaturanwendungen kann es notwendig sein, dass die Verbindungsschicht ihren elastischen beziehungsweise duktilen Charakter bei Temperaturen von über 1000 Grad, über 1200 Grad oder über 1400 Grad Celsius beibehält. Vorliegend wurde zudem erkannt, dass Molybdän-Titancarbid-Komposite diese Aufgabe erfüllen können. Vorliegend ist die Verbindungsschicht 4 daher zumindest aus einem Molybdän-Titanarbit-Kompositwerkstoff gebildet. Vorliegend ist die Verbindungsschicht 4 ausschließlich aus dem Molybdän-Titanarbit-Kompositwerkstoff gefertigt. Vorteilhafterweise ist die Verbindungsschicht 4 sowohl mit der ersten Schicht 2 als auch mit der zweiten Schicht 3 zumindest indirekt stoffschlüssig verbunden. Beispielsweise kann die Verbindungsschicht 4 die erste Schicht 2 berühren und mit dieser direkt stoffschlüssig verbunden sein. Alternativ oder zusätzlich kann die Verbindungsschicht 4 die zweite Schicht 3 berühren und mit dieser stoffschlüssig verbunden sein.

Vorliegend ist zwischen der ersten Schicht 2 und der Verbindungsschicht 4 eine erste Diffusionssperre 5 angeordnet. Die erste Diffusionssperre 5 ist mit der Verbindungsschicht 4 und der ersten Schicht 2 jeweils direkt stoffschlüssig verbunden. Mit anderen Worten berührt die erste Diffusionssperre 5 sowohl die Verbindungsschicht 4 als auch die erste Schicht 2 und weist an der jeweiligen Berührungsfläche einen jeweiligen Stoffschluss auf. Daraus resultiert, dass die Verbindungsschicht 4 indirekt, das bedeutet über die erste Diffusionssperre 5, mit der ersten Schicht 2 stoffschlüssig verbunden ist. Zwischen der Verbindungsschicht 4 und der zweiten Schicht 3 ist vorliegend eine zweite Diffusionssperre 6 angeordnet. Die zweite Diffusionssperre 6 ist mit der Verbindungsschicht 4 und der zweiten Schicht 3 stoffschlüssig verbunden. Die zweite Diffusionssperre 6 berührt sowohl die Verbindungsschicht 4 als auch die zweite Schicht 3 und weist an der jeweiligen Berührfläche einen jeweiligen Stoffschluss auf. Somit ist die Verbindungsschicht 4 vorliegend indirekt, das heißt über die zweite Diffusionssperre 6, stoffschlüssig mit der zweiten Schicht 3 verbunden.

Die optionale erste Diffusionssperre 5 und/oder die optionale zweite Diffusionssperre 6 sind jeweils dafür ausgebildet, das Eindringen beziehungsweise Diffundieren schädlicher Reagenzien in die Verbindungsschicht 4 zu unterbinden. Insbesondere sind die Diffusionssperren 5 und 6 dazu ausgebildet, das Eindringen beziehungsweise Diffundieren von Sauerstoff in die Verbindungsschicht 4 zu unterbinden. Auf diese Weise können die Diffusionssperren 5, 6 unerwünschte chemische Reaktionen, insbesondere Oxidation, an der Verbindungsschicht 4 unterbinden. Dies ist insbesondere dann wichtig, wenn die Verbindungsschicht 4 yttriumstabilisiertes Zirkonoxid umfasst, da dieses unter Sauerstoffeinfluss oxidiert und seine elastischen beziehungsweise duktilen Eigenschaften verlieren kann. Die erste Diffusionssperre 5 und/oder die zweite Diffusionssperre 6 können jeweils aus Aluminiumoxid gefertigt sein.

Auf die erste Diffusionssperre 5 kann insbesondere dann verzichtet werden, wenn ein Eindringen der unerwünschten Reagenzien, insbesondere Sauerstoff, bereits durch die erste Schicht 2 in hinreichendem Maße verhindert ist. Analog kann auf die zweite Diffusionssperre 6 insbesondere dann verzichtet werden, wenn das Eindringen der unerwünschten Reagenzien, insbesondere Sauerstoff, durch die zweite Schicht 3 bereits in hinreichendem Maße verhindert wird.

Vorliegend ist der Werkstoffverbund 1 beziehungsweise die erste Schicht 2 auf dem Trägerkörper 7 angeordnet. Der Trägerkörper 7 ist vorzugsweise zumindest aus einem von dem ersten Werkstoff und dem zweiten Werkstoff unterschiedlichen dritten Werkstoff gebildet. Vorliegend ist der dritte Werkstoff ein Metall beziehungsweise eine metallische Legierung. Der Trägerkörper 7 und der Werkstoffverbund 1 können Teil eines Bauteils 11 sein. Das Bauteil 11 kann durch die vorliegende Anordnung eine gegenüber anderen Bauteilen besonders hohe thermische Belastbarkeit aufweisen. Insbesondere bildet der Werkstoffverbund 1 eine Wärmedämmschicht auf dem Trägerkörper 7 aus. Der Werkstoffverbund 1 bildet ein Hitzeschild 13 für den Trägerkörper 7 aus. Dabei bilden innerhalb des Werkstoffverbunds 1 die erste Schicht 2 und die zweite Schicht 3 jeweilige Teildämmschichten aus. Aus diesem Grund weist die zweite Schicht 3 eine höhere thermische Belastbarkeit als die erste Schicht 2 auf. Die erste Schicht 2 kann wiederum eine höhere thermische Belastbarkeit als der Trägerkörper 7 aufweisen.

Beispielsweise kann die zweite Schicht 3 eine Dicke von etwa 300 Mikrometern aufweisen. Die zweite Schicht 3 kann mit dem englischen Fachbegriff "Thermal Barrier Coating", kurz "TBC", zu Deutsch etwa "Wärmedämmungsbeschichtung", bezeichnet werden. Derartige Wärmedämmungsbeschichtungen sind dem Fachmann bekannt. Die zweite Diffusionssperre 6 und die erste Diffusionssperre 5 können jeweils eine Dicke von etwa 100 Nanometern aufweisen. Die Verbindungsschicht kann vorteilhafterweise eine Dicke von etwa 300 bis 500 Mikrometer aufweisen. Die erste Schicht 2 kann eine Dicke von etwa 3 bis 5 Millimeter aufweisen.

Bei der Herstellung des Werkstoffverbunds 1 kann zunächst die erste Diffusionssperre 5 auf der ersten Schicht 2 angeordnet werden beziehungsweise auf die erste Schicht 2 aufgebracht werden. Mit anderen Worten kann zunächst die erste Schicht 2 mit der ersten Diffusionssperre 5 beschichtet werden. Vorzugsweise erfolgt das Beschichten beziehungsweise das Anordnen der ersten Diffusionssperre 5 mittels Atomlagenabscheidung. Die Atomlagenabscheidung ermöglicht eine besonders dünne Schichtdicke, eine besonders hohe definierte Schichtdicke sowie eine besonders defektfreie und gleichmäßige Verteilung der ersten Diffusionssperre 5 auf der ersten Schicht 2.

Anschließend wird der Molybdän-Titancarbid-Kompositwerkstoff auf der ersten Diffusionssperre 5 angeordnet. Ist bei einer Ausführungsform des Werkstoffverbunds 1 keine erste Diffusionssperre 5 vorgesehen, so wird die Verbindungsschicht 4 auf die erste Schicht 2 aufgebracht beziehungsweise an der ersten Schicht 2 angeordnet. Mit anderen Worten wird entweder die erste Schicht 2 oder die erste Diffusionssperre 5 mit der Verbindungsschicht 4 beschichtet. Das Anordnen der Verbindungsschicht 4 beziehungsweise das Beschichten mit der Verbindungsschicht 4 erfolgt vorteilhafterweise durch Kaltgasspritzen. Dieses Verfahren ist besonders vorteilhaft, da der Kompositwerkstoff bei diesem Beschichtungsverfahren keine Phasenumwandlung und keine Oxidation erfährt. Die Prozesstemperatur liegt mit höchstens etwa 1100 Grad Celsius weit unterhalb der Schmelztemperatur des Kompositwerkstoffs von mehr als 2600 Grad Celsius. Partikel der Verbindungsschicht 4 treffen in einem Inertgasstrom auf die jeweilige Oberfläche (erste Schicht 2 oder erste Diffusionssperre 5). Es werden poröse Pulverteilchen des Molybdän-Titancarbid-Kompositwerkstoffs auf die jeweilige Oberfläche aufgebracht. Diese Pulverteilchen sind aufgrund der Porosität plastisch verformbar. Hergestellt werden die Pulverteilchen wiederum aus mikrometergroßen oder submikrometergroßen Molybdän- und Titancarbid-Mikropartikeln.

Diese Molybdän- und Titancarbid-Mikropartikel können beispielsweise durch Mahlen von Titancarbid- und Molybdän-Partikeln in Alkohol von etwa zwei Stunden hergestellt werden. Nach dem Verdampfen des Alkohols kann das gemischte Pulver kalt isostatisch bei 2500 bar eine Minute gepresst werden. Anschließend erfolgt ein Ausgasprozess bei 600 Grad Celsius für zwölf Stunden unter Hochvakuum. Danach folgt ein Sintervorgang bei 1600 Grad Celsius und 1610 Megapascal durch heißes isostatisches Pressen. Ein Kern des Molybdän-Titancarbid-Kompositwerkstoffs wird aus Titancarbid gebildet und von einer (Mo, Ti)C-Hülle umgeben. Die Bildung der (Mo, Ti)C-Phase erfolgt durch Diffusion von Molybdän in das Titancarbid.

Die porösen Molybdän-Titancarbid-Partikel werden mit hoher Geschwindigkeit auf die jeweilige Oberfläche aufgebracht. Dazu wird Prozessgas, bevorzugt Stickstoff, Formiergas, Helium oder eine Mischung daraus, unter hohem Druck auf mehrere 100 Grad Celsius erwärmt und in einer Lavaldüse entspannt. Durch eine konvergent-divergente Düsenform wird das Prozessgas auf Überschallgeschwindigkeit beschleunigt. Vor dem Düseneingang werden die Molybdän-Titancarbid-Partikel in den heißen Prozessgasstrom eindosiert. Die injizierten Partikel werden erwärmt und mit dem austretenden Gasstrahl auf eine so hohe Geschwindigkeit beschleunigt, dass sie ohne vorheriges An- oder Aufschmelzen bei einem Aufprall auf die Oberfläche fest anhaften und eine dichte Schicht in der Dicke von einigen 100 Mikrometern bilden. Ist die Oberfläche die erste Diffusionssperre 5, so können sich Partikel der ersten Diffusionssperre 5 bei diesem Vorgang zusätzlich miteinander verbinden.

Von zentraler Bedeutung bei diesem Kaltgasspritzen ist die poröse Struktur der Molybdän-Titancarbid-Pulverteilchen, die beim Aufprall auf der Oberfläche kollabieren. Im Inneren der Partikel kommt es bei deren Kollaps zu schnellem Gleiten der Mikropartikel, aus denen die einzelnen Pulverteilchen aufgebaut sind. Die metallischen Bestandteile (Molybdän, Mo) verschweißen dabei kalt und betten eine Sprödphase aus Titancarbid, TiC in einen neu geformten Festkörper (die Verbindungsschicht 4) ein. Die Anbindung an die Oberfläche, insbesondere die erste Diffusionssperre 5, erfolgt durch Gleiten von Kristallebenen zur Aufnahme der eingetragenen kinetischen Energie. Wären die Pulverteilchen nicht porös sondern massiv, würden sie als kaum verformbare Wurfgeschosse die Oberfläche zerstören. Dank ihres porösen inneren Aufbaus fungieren die Pulverteilchen aber als Deformationszone. Die Zusammenfassung der Molybdän- und Titancarbid-Mikropartikel hat den Zweck, sie zu schwereren Einheiten, nämlich den Pulverteilchen, zusammenzufassen, welche dank ihrer größeren Trägheit in der Lage sind, eine Hochdruckfront vor der Werkstoffoberfläche zu durchdringen, um die Oberfläche zu erreichen. Einzeln wären die Molybdän- und Titan-Mikropartikel weniger gefährlich für die Oberfläche, würden diese praktisch aber nicht erreichen können, weil sie in einer Prallströmung vor der Oberfläche dem Gas folgen würden.

Das Formiergas, bestehend vorzugsweise aus 95 mol-Prozent Stickstoff und 5 mol-Prozent Wasserstoff, eignet sich als Prozessgas zur Beschichtung mit Molybdän-Titancarbid-Pulverteilchen besonders gut, weil der Wasserstoff auf das Molybdän reduzierend wirkt und eine Oxidbildung während des Abscheidungsprozesses vermeidet.

Zum Schutz des Molybdäns in der Verbindungsschicht 4 wird anschließend vorteilhafterweise die zweite Diffusionssperre 6 auf der Verbindungsschicht 4 angeordnet. Mit anderen Worten wird die Verbindungsschicht 4 mit der zweiten Diffusionssperre 6 beschichtet. Das Auftragen beziehungsweise Anordnen der zweiten Diffusionssperre 6 erfolgt analog zu dem Auftragen beziehungsweise Anordnen der ersten Diffusionssperre 5, weshalb dies hier nicht erneut beschrieben ist. Dies gilt selbstverständlich auch dann, wenn keine erste Diffusionssperre 5 vorgesehen ist.

Anschließend kann die zweite Schicht 3 auf die Verbindungsschicht 4 beziehungsweise die zweite Diffusionssperre 6 aufgebracht beziehungsweise auf dieser angeordnet werden. Mit anderen Worten kann die Verbindungsschicht 4 beziehungsweise die zweite Diffusionssperre 6 mit der zweiten Schicht 3 beschichtet werden. Hierfür eignet sich insbesondere atmosphärisches Plasmaspritzen. Vorzugsweise wird das yttriumstabilisierte Zirkonoxid mittels des atmosphärischen Plasmaspritzens auf der Verbindungsschicht 4 beziehungsweise der zweiten Diffusionssperre 6 angeordnet.

FIG 2 zeigt beispielhaft und äußerst schematisch eine Gasturbine 10. Die Gasturbine 10 weist ein Bauteil 11 auf, welches einen Trägerkörper 7 aus einer metallischen Legierung und ein Hitzeschild 13 umfasst. Der Werkstoffverbund 1 beziehungsweise der Hitzeschild 13 sind dazu ausgebildet, den Trägerkörper 7 vor einer thermischen Belastung durch eine Verbrennung von Brennstoff in der Gasturbine 10 zu schützen. Dank des Hitzeschilds 13 ist ein Betrieb der Gasturbine 10 bei einer Verbrennungstemperatur von mehr als 1400° Celsius, mehr als 1600°C oder noch mehr möglich, was gegenüber einer geringeren Verbrennungstemperatur einen höheren Wirkungsgrad ermöglicht. Durch den höheren Wirkungsgrad kann ein Schadstoffausstoß der Gasturbine 10 verringert werden. Außerdem ist der Betrieb der Gasturbine 10 im Vergleich zu einer Gasturbine mit geringerem Wirkungsgrad effizienter und kostengünstiger.

Beispielhafte für Bauteile 11 der Gasturbine 10, welche mittels des Hitzeschilds 13 aus dem Werkstoffverbunds 1 geschützt werden können, sind beispielsweise Brennkammer, Übergangskanäle, Leitschaufeln und Ringsegmente. Außerdem ist im Betrieb einer solchen Gasturbine 10 auch der Einsatz wasserstoffreichen Brennstoffs beziehungsweise Brenngases möglich, weil der Verbund aus erster Schicht 2 und zweiter Schicht 3 das Bauteil 11 der Gasturbine 10 vor Korrosion durch Wasser schützt, welches im Betrieb aufgrund der hohen Flammgeschwindigkeit und des Flammenrückschlags des Wasserstoffs zugespritzt werden kann.

Dank der thermischen Belastbarkeit des Werkstoffverbunds 1 beziehungsweise des Hitzeschilds 13 kann eine Filmkühlung von Brennkammerelementen der Gasturbine 10 gegenüber dem Stand der Technik verringert werden oder ganz darauf verzichtet werden. Filmkühlung bedeutet, dass durch Bohrungen in der metallischen Auskleidung der Brennkammer kühle, nicht verbrannte Luft eingeblasen wird. Diese kühle Luft mischt sich mit dem heißen Gas. Die Temperatur sinkt und bei der Verbrennung entstehen unerwünschte Nebenprodukte wie Kohlenmonoxid und unverbrannte Kohlenwasserstoffe. Zum anderen erfolgt durch die zugeführte Luft eine Verbrennung des verblendeten Brennstoff-Luft-Gemischs. Das bedeutet, das Gemisch ist fetter geworden, weil mehr Stickstoff und Sauerstoff vorhanden sind. Folglich werden mehr schädliche Stickoxide gebildet. Dank der hohen thermischen Belastbarkeit und einer verbesserten Temperaturisolation der Gasturbine 10 durch den Werkstoffverbunds 1 beziehungsweise das Hitzeschild 13 ermöglicht den Verzicht beziehungsweise die Herabsetzung der Filmkühlung und somit eine niedrigere Schadstoffemission. Durch einen geringeren Kühlbedarf der Gasturbine 10 allgemein können weniger Durchlässe für Kühlfluid nötig sein. Hierdurch werden die Kosten für die Herstellung der Gasturbine 10 gesenkt und/oder der Wirkungsgrad der Gasturbine 10 weiter erhöht.

## Patentansprüche

1. Werkstoffverbund (1) mit:
- einer ersten Schicht (2), welche zumindest aus einem keramischen ersten Werkstoff gebildet ist; und
- einer auf der ersten Schicht (2) angeordneten zweiten Schicht (3), welche zumindest aus einem von dem ersten Werkstoff verschiedenen keramischen zweiten Werkstoff gebildet ist;
**gekennzeichnet durch**
eine zwischen der ersten Schicht (2) und der zweiten Schicht (3) angeordnete und zumindest teilweise aus einem Molybdän-Titancarbid-Kompositwerkstoff gebildete Verbindungsschicht (4), über welche die erste Schicht (2) mit der zweiten Schicht (3) verbunden ist.

2. Werkstoffverbund (1) nach Anspruch 1, **dadurch gekennzeichnet, dass** die Verbindungsschicht (4) sowohl die erste Schicht (2) als auch die zweite Schicht (3) direkt berührt.

3. Werkstoffverbund (1) nach Anspruch 1 oder 2, **dadurch gekennzeichnet, dass** die Verbindungsschicht (4) sowohl mit der ersten Schicht (2) als auch mit der zweiten Schicht (3) über wenigstens eine jeweilige stoffschlüssige Verbindung verbunden ist.

4. Werkstoffverbund (1) nach Anspruch 3, **dadurch gekennzeichnet, dass** die Verbindungsschicht (4) mit der ersten Schicht (2) und/oder mit der zweiten Schicht (3) direkt stoffschlüssig verbunden ist.

5. Werkstoffverbund (1) nach einem der vorhergehenden Ansprüche, **dadurch gekennzeichnet, dass** zwischen der ersten Schicht (2) und der Verbindungsschicht (4) eine erste Diffusionssperre (5) und/oder zwischen der zweiten Schicht (3) und der Verbindungsschicht (4) eine zweite Diffusionssperre (6) angeordnet ist.

6. Werkstoffverbund (1) nach Anspruch 5, **dadurch gekennzeichnet, dass** die erste Diffusionssperre (5) und/oder die zweite Diffusionssperre (6) zumindest aus Aluminiumoxid gebildet ist.

7. Werkstoffverbund (1) nach Anspruch 5 oder 6, **dadurch gekennzeichnet, dass** die erste Diffusionssperre (5) mittels Atomlagenabscheidung auf die erste Schicht (2) aufgebracht ist und/oder die zweite Diffusionssperre (6) mittels Atomlagenabscheidung auf die Verbindungsschicht (4) aufgebracht ist.

8. Werkstoffverbund (1) nach einem der vorhergehenden Ansprüche, **dadurch gekennzeichnet, dass** der erste Werkstoff ein keramischer Faserverbundwerkstoff ist, der insbesondere zumindest aus keramischen Fasern (20) und einer keramischen Matrix (21) gebildet ist, in welche die Fasern (20) eingebettet sind.

9. Werkstoffverbund (1) nach einem der vorhergehenden Ansprüche, **dadurch gekennzeichnet, dass** der zweite Werkstoff eine höhere Hitzebeständigkeit und/oder Korrosionsbeständigkeit als der erste Werkstoff aufweist.

10. Werkstoffverbund (1) nach einem der vorhergehenden Ansprüche, **dadurch gekennzeichnet, dass** der zweite Werkstoff durch yttriumstabilisiertes Zirkonoxid gebildet ist.

11. Bauteil (11), welches zumindest aus einem Werkstoffverbund (1) nach einem der vorhergehenden Ansprüche gebildet ist.

12. Bauteil (11) nach Anspruch 11, **dadurch gekennzeichnet, dass** das Bauteil (11) wenigstens einen Trägerkörper (7) aufweist, welcher zumindest teilweise mit dem Werkstoffverbund (1) als Hitzeschild (13) versehen ist.

13. Bauteil (11) nach Anspruch 11 oder 12, **dadurch gekennzeichnet, dass** der Trägerkörper (7) aus einem von dem ersten und dem zweiten Werkstoff unterschiedlichen dritten Werkstoff, insbesondere aus einem metallischen Werkstoff, gebildet ist.

14. Gasturbine (10) mit einem Bauteil (11) nach einem der Ansprüche 11 bis 13.

15. Verfahren zum Herstellen eines Werkstoffverbunds (1), bei welchem eine erste Schicht (2) zumindest aus einem keramischen ersten Werkstoff und eine zweite Schicht (3) auf der ersten Schicht (2) angeordnet und zumindest aus einem von dem ersten Werkstoff verschiedenen keramischen zweiten Werkstoff gefertigt wird,
**dadurch gekennzeichnet, dass**
zwischen der ersten Schicht (2) und der zweiten Schicht (3) eine zumindest teilweise aus einem Molybdän- Titancarbid-Kompositwerkstoff gebildete Verbindungsschicht (4) angeordnet wird, über welche die erste Schicht (2) mit der zweiten Schicht (3) verbunden wird.
